# EUROPEAN PATENT SPECIFICATION

(11) **EP 3 993 170 B1**
(45) Date of publication and mention of the grant of the patent: **12.06.2024**
(21) Application number: 20306299.7
(22) Date of filing: 30.10.2020
(51) Int. Cl.: H01R 9/26

(54) **DISTRIBUTION BLOCK COOPERATING WITH A SUPPORT RAIL IN LONGITUDINAL CONFIGURATION AND IN TRANSVERSE CONFIGURATION**
MIT EINER TRAGSCHIENE IN LÄNGS- UND IN QUERKONFIGURATION ZUSAMMENWIRKENDER VERTEILERBLOCK
BLOC DE DISTRIBUTION COOPÉRANT AVEC UN RAIL DE SUPPORT DANS UNE CONFIGURATION LONGITUDINALE ET UNE CONFIGURATION TRANSVERSALE

(43) Date of publication of application: 04.05.2022
(73) Proprietor: Tyco Electronics France SAS, 95300 Pontoise (FR); TE Connectivity India Private Limited, Bangalore 560048 (IN)
(72) Inventor: R, Dhanabal, Bangalore, Karnataka 560048 (IN); BISHT, Saurabh, Bangalore, Karnataka 560048 (IN); FRANCE, Philippe, 95300 PONTOISE (FR); DELIGNY, Charlotte, 95300 PONTOISE (FR); ESCOFFIER, Ana-Line, 95300 PONTOISE (FR)
(74) Representative: Germain Maureau

(56) References cited:
- DE-U1-202010 005 215
- US-A- 4 111 517
- US-B1- 9 303 811

## Description

### Field of the invention

The present invention concerns a distribution block configured to cooperate with a support rail according to a longitudinal configuration and a transverse configuration.

### Prior art

DE202010005215U1 discloses a distribution block according to the preamble of claim 1.

It is known to have a distribution block that can be fixed on a support rail as a DIN rail. For this purpose, the distribution block includes a snap-fit device as an integrated part of the distribution block. Another possibility is that the distribution block is configured to cooperate with an accessory used as an intermediate connecting part.

The drawback of these arrangements is that the distribution block cooperates according to a fixed orientation with the support rail. This constraint does not facilitate the installation of the distribution block in an installation comprising several electrical devices mounted on the same support rail. This can be the case in an electrical cabinet.

A solution could be to have a different distribution blocks that have different snap-fit devices. It is also possible to have different accessories that can be used according to the needed spatial configuration in the electrical cabinet.

However, these solutions imply to conceive and then handle many different part references, each part reference corresponding to a spatial configuration of the distribution block on the support rail.

The present invention aims to solve all or some of the disadvantages mentioned above.

### Summary of the invention

For this purpose, the present invention relates to a distribution block configured to cooperate with a support rail extending according to a support direction, the distribution block being provided with:
an insulating housing,
a conducting entity included in the insulating housing,
at least one conductor inlet formed in the insulating housing,
a plurality of conductor outlets formed in the insulating housing and organized in one or several rows, said one or several rows extending substantially parallel to an extension direction of the insulating housing,
a mounting assembly attached on the insulating housing and configured to cooperate with the support rail, the distribution block being arranged to be mounted on the support rail according to a longitudinal configuration wherein the extension direction of the insulating housing is substantially parallel to the support direction and according to a transverse configuration wherein the extension direction of the insulating housing is transverse to the support direction.

The mounting assembly of the distribution block can cooperate with the support rail according to two different configurations. The insulating housing of the distribution block can be oriented according to the support direction or transverse to the support direction.

Therefore, there is only one distribution block that can be installed on the support rail in two different ways. There is no need of additional parts or to have different distribution block references. It simplifies the handling of the distribution blocks in terms of stock and part references. The distribution block can also be displaced when already wired if there is a need of place for another part to be installed on the support rail.

According to the invention, the mounting assembly comprises a snap-fit device configured to cooperate with the support rail, the snap-fit device comprises a pair of opposed flanges or a plurality of pairs of opposed flanges.

Each flange of a pair is located on one side of the support rail transversally to the support direction when the snap-fit device cooperates with the support rail.

According to the invention, the mounting assembly is fixed on the insulating housing and wherein the snap-fit device comprises a plurality of pairs of opposed flanges, said plurality of pairs of opposed flanges comprising at least one pair of longitudinal opposed flanges configured to cooperate with the support rail in longitudinal configuration and at least one pair of transverse opposed flanges configured to cooperate with the support rail in transverse configuration.

In other words, the at least one pair of longitudinal opposed flanges extend according to the extension direction of the insulating housing and the at least one pair of transverse opposed flanges extend transversally.

This provision enables to have a mounting assembly that is ready to cooperate in longitudinal configuration or in transverse configuration without modification of the mounting assembly.

According to the invention, the at least one pair of transverse opposed flanges are located between the at least one pair of longitudinal opposed flanges transversally to the extension direction of the insulating housing.

This provision enables a compact geometry of the plurality of pairs of opposed flanges. Compared to a standard distribution block that only has longitudinal pairs of opposed flanges the present mounting assembly is not bigger.

Therefore, the configuration of the plurality of pairs of opposed flanges allows keeping a compact dimension of the distribution block.

According to an aspect of the invention, at least one part of the insulating housing and the mounting assembly are realized in one piece.

This provision enables to easily manufacture the distribution block as it reduces the number of parts constituting the distribution block. According to an aspect of the invention, said piece is realized by molding. Said piece is therefore fast to manufacture.

According to an aspect which is not part of the invention, the mounting assembly is configured to be mounted on the insulating housing in a longitudinal position when in longitudinal configuration and in transverse position when in transverse configuration.

This provision allows to define to two different configurations with the same mounting assembly, the mounting assembly being mounted differently on the insulating housing according to the chosen configuration.

This provision allows having a unique mounting assembly for installing the distribution block in different configurations. It therefore enables to reduce the numbers of part references, as there is only one type of mounting assembly for both configurations.

According to an aspect which is not part of the invention, the mounting assembly is provided with ribs and/or grooves configured to cooperate with complementary longitudinal grooves and/or ribs of the insulating housing in longitudinal position and configured to cooperate with complementary transverse grooves and/or ribs of the insulating housing in transverse position.

According to an aspect which is not part of the invention, the ribs and/or grooves of the mounting assembly define at least one right angle corner. It helps maintaining the cooperation in both positions. Preferably, the ribs and/or grooves are profiled and extend according to a mounting direction. In particular, the right angle corner is defined by a profile of a rib of the ribs and/or grooves.

According to an aspect which is not part of the invention, the ribs and/or grooves are configured to engender at least one T-shaped profiled construction and/or at least one inverted T-shaped profiled recess extending according to the mounting direction and configured to cooperate with a complementary recess or construction of the insulating housing.

According to an aspect which is not part of the invention, the mounting assembly comprises several distinct parts.

In particular, the mounting assembly comprises two parts. This provision allows defining a smaller mounting assembly. Indeed, in longitudinal configuration for example, the two distinct parts are distant from each other.

The several distinct parts allow a good fixation between the insulating housing and the support rail.

According to an aspect which is not part of the invention, the several distinct parts are profiled parts. This enables to easily manufacture the several distinct parts. In particular, the several distinct parts are molded.

According to an aspect of the invention, the mounting assembly comprises a release mechanism configured to disengage the snap-fit device.

According to an aspect of the invention, the mounting assembly comprises several release mechanisms.

According to an aspect of the invention, the release mechanism comprises a biasing element configured to displace at least one part of a flange, the biasing element comprising a lever configured to be displaced by hand and/or by a tool.

For example, the lever comprises a slit for the insertion of the tool as a screwdriver. According to another possibility, the biasing element includes a counter spring configured to maintain the at least one part of the flange in cooperation with the support rail.

According to an aspect of the invention, the insulating housing presents a plugging side on which the plurality of conductor outlets are located and a connecting side on which the mounting assembly is attached, the plugging side and the connecting side being opposed according to a normal direction of the insulating housing that is substantially perpendicular to the extension direction of the insulating housing.

According to an aspect of the invention, the mounting assembly is located between the connecting side and the support rail when the distribution block cooperates with the support rail.

According to an aspect of the invention, the distribution block comprises an inlet screwed mechanism configured to connect a conductor installed in the at least one conductor inlet.

According to one possibility, the distribution block comprises one conductor inlet and the inlet screwed mechanism comprises one screw accessible from the outside of the insulating housing.

According to another possibility, the distribution block comprises two conductor inlets and the inlet screwed mechanism comprises two corresponding screws accessible from the outside of the insulating housing.

According to an aspect of the invention, the at least one conductor inlet is located on an end side of the insulating housing, the end side extending transversally to the extension direction of the insulating housing.

According to an aspect of the invention, the at least one conductor inlet insertion direction is substantially perpendicular to each insertion direction of the plurality of conductor inlets.

According to a first possibility, the at least one conductor inlet insertion is substantially orthogonal to the extension plane of the end side.

According to a second possibility, the at least one conductor inlet insertion is substantially longitudinal to the extension plane of the end side. In this case, the insulating housing comprises a corresponding inlet casing extending from the extension plane of the end side.

According to an aspect of the invention, the distribution block comprises a push-in mechanism including a leaf spring for each conductor outlet, the insulating housing having for each conductor outlet an actuating opening for displacing said leaf spring.

According to an aspect of the invention, at least a part the plurality of conductor outlets and corresponding leaf springs have different sizes adapted to receive different sized conductors.

For example, a first group of conductor outlets is adapted to a first conductor size and a second group of conductor outlets is adapted to a second conductor size that is bigger.

According to an aspect of the invention, at least a part of the leaf springs of the push-in mechanism are realized in one piece.

According to another possibility, the conductive entity and leaf springs constitute a single piece in brass.

According to another possibility, the leaf springs are independent springs configured to cooperate with the conductive entity.

According to an aspect of the invention, the conductive entity comprises a metal sheet that is cut and folded or a machined metal block.

### Brief description of the figures

The invention will be better understood with the aid of the detailed description that is set out below with reference to the appended drawing in which:
- figure 1 is a perspective view of a distribution block,
- figures 2 to 6 are perspective views of variants of the distribution block,
- figure 7 is a perspective view of a mounting assembly of the distribution block, the distribution block being mounted on a support rail according to a transverse configuration,
- figure 8 is a perspective view of a distribution block with a variant, not forming part of the claimed invention, of the mounting assembly, the terminal block being mount on the support rail according to a longitudinal configuration,
- figure 9 is a perspective view of the distribution block of figure 8 mounted in the transverse configuration,
- figure 10 is a perspective view of the mounting assembly of the distribution block of figures 8 and 9,
- figure 11 is an inside view of the distribution block,
- figures 12 to 15 are perspective views of variants of a conductive entity of the distribution block.

### Description with reference to the figures

In the following detailed description of the figures defined above, the same elements or the elements that are fulfilling identical functions may retain the same references so as to simplify the understanding of the invention.

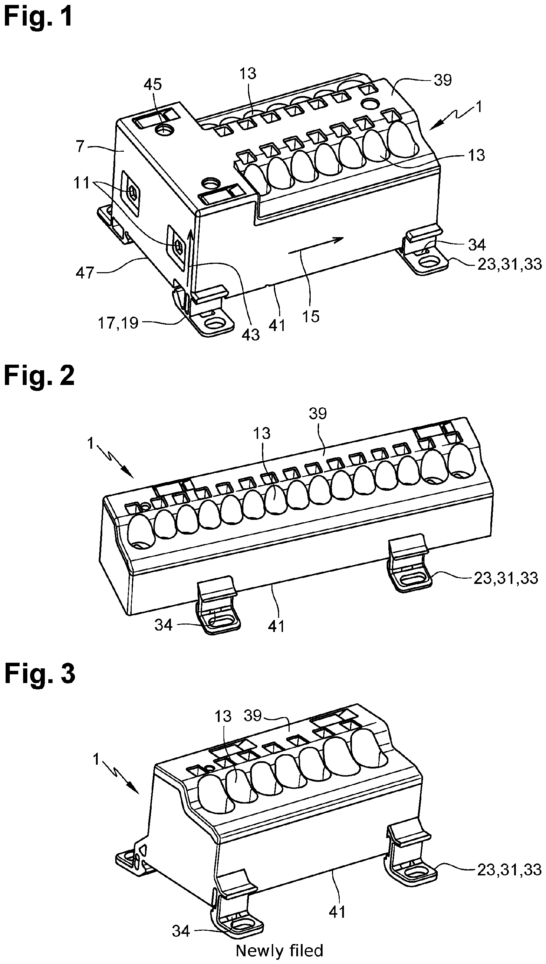

As illustrated in figures 1 to 7, a distribution block 1 is configured to cooperate with a support rail 3 extending according to a support direction 5.

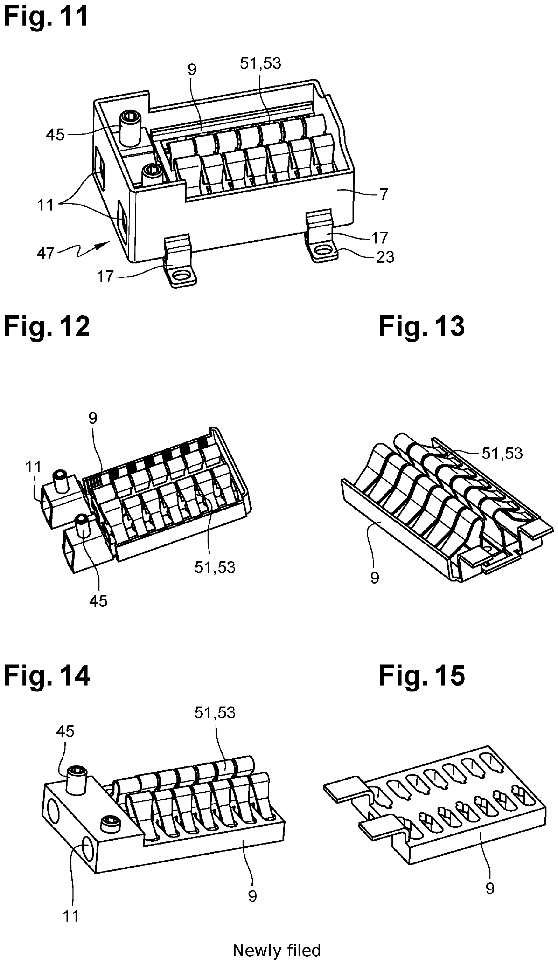

The distribution block 1 is provided with an insulating housing 7, a conducting entity 9 included in the insulating housing 7 as shown on figure 11, at least one conductor inlet 11 formed in the insulating housing 7 and a plurality of conductor outlets 13 formed in the insulating housing 7 and organized in one or several rows.

Said one or several rows are extending substantially parallel to an extension direction 15 of the insulating housing 7.

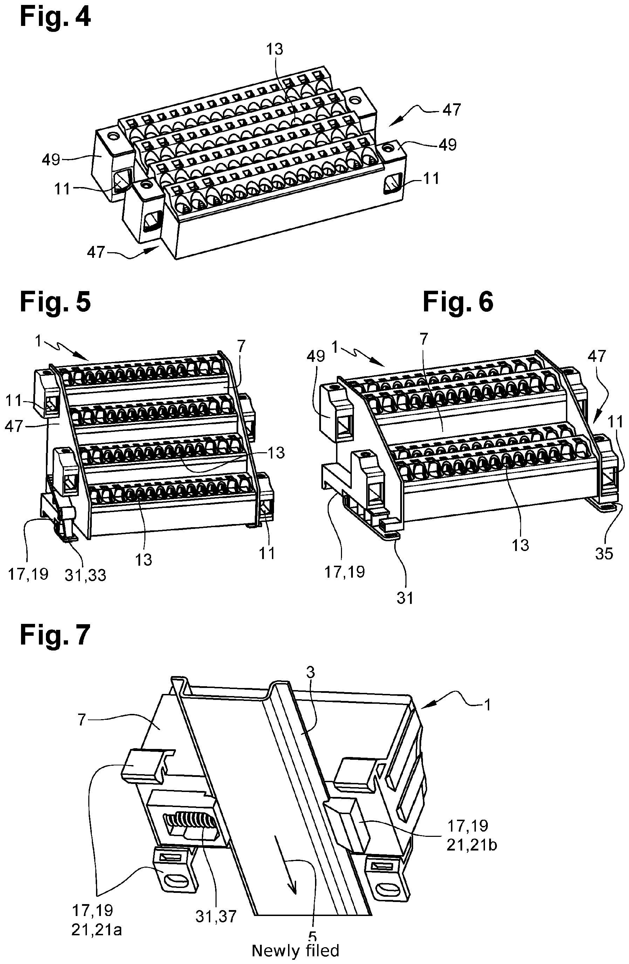

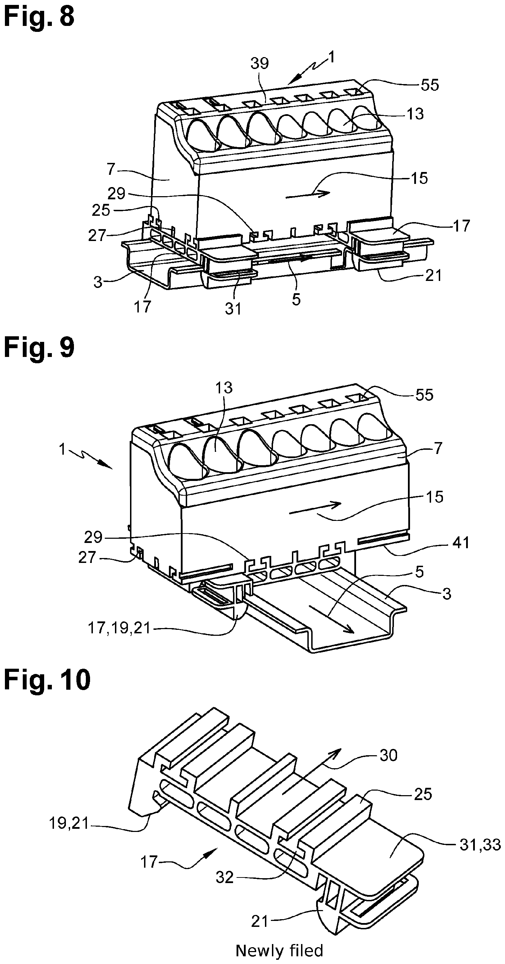

The distribution block 1 is also provided with a mounting assembly 17 attached on the insulating housing 7 and configured to cooperate with the support rail 3. The distribution block 1 is arranged to be mounted on the support rail 3 according to a longitudinal configuration wherein the extension direction 15 of the insulating housing 7 is substantially parallel to the support direction 5 as in figure 8 and according to a transverse configuration wherein the extension direction 15 of the insulating housing 7 is transverse to the support direction 5 as in figures 7 and 9.

The mounting assembly 17 of the distribution block 1 can cooperate with the support rail 3 according to two different configurations. The insulating housing 7 of the distribution block 1 can be oriented according to the support direction 5 or transverse to the support direction 5.

The mounting assembly 17 comprises a snap-fit device 19 configured to cooperate with the support rail 3, the snap-fit device 19 comprises a pair of opposed flanges 21 or a plurality of pairs of opposed flanges 21.

Each flange 21 of a pair is located on one side of the support rail 3 transversally to the support direction 5 when the snap-fit device 19 cooperates with the support rail 3.

According to the variant of figures 1 to 7, the mounting assembly 17 is fixed on the insulating housing 7. The snap-fit device 19 comprises a plurality of pairs of opposed flanges 21.

The plurality of pairs of opposed flanges 21 comprises at least one pair of longitudinal opposed flanges 21a configured to cooperate with the support rail 3 in longitudinal configuration and at least one pair of transverse opposed flanges 21b configured to cooperate with the support rail 3 in transverse configuration.

In other words, the at least one pair of longitudinal opposed flanges 21a extend according to the extension direction 15 of the insulating housing 7 and the at least one pair of transverse opposed flanges 21b extend transversally.

The at least one pair of transverse opposed flanges 21b are located between the at least one pair of longitudinal opposed flanges 21a transversally to the extension direction 15 of the insulating housing 7.

At least one part of the insulating housing 7 and the mounting assembly 17 are realized in one piece. Said piece is realized by molding.

Some of the flanges 21 can be provided with extensions 23 including openings as an alternative fixation means for screws.

According to a variant illustrated on figures 8 to 10, the mounting assembly 17 is configured to be mounted on the insulating housing 7 in a longitudinal position when in longitudinal configuration and in transverse position when in transverse configuration.

The mounting assembly 17 is provided with ribs and/or grooves 25 configured to cooperate with complementary longitudinal grooves and/or ribs 27 of the insulating housing 7 in longitudinal position and configured to cooperate with complementary transverse grooves and/or ribs 29 of the insulating housing 7 in transverse position.

The ribs and/or grooves 25 of the mounting assembly 17 define at least one right angle corner.

The ribs and/or grooves 25 are profiled and extend according to a mounting direction 30. The right angle corner is defined by a profile of a rib of the ribs and/or grooves 25.

The ribs and/or grooves 25 are configured to engender inverted T-shaped profiled recesses 32 extending according to the mounting direction 30 and configured to cooperate with a complementary construction of the insulating housing 7.

The mounting assembly 17 comprises several distinct parts. Here in particular, the mounting assembly 17 comprises two parts. The several distinct parts are profiled parts as disclosed on figure 10.

For all the variants as illustrated in figures 1 to 10, the mounting assembly 17 comprises a release mechanism 31 configured to disengage the snap-fit device 19. The mounting assembly can comprise several release mechanisms 31.

The release mechanism 31 comprises a biasing element 33 configured to displace at least one part of a flange 21, the biasing element 33 comprising a lever configured to be displaced by hand and/or by a tool to be inserted in a dedicated housing 34.

For example, the lever comprises a slit 35 for the insertion of the tool as a screwdriver. According to another possibility, the biasing element 33 includes a counter spring 37 configured to maintain the at least one part of the flange 21 in cooperation with the support rail 3.

The insulating housing 7 presents a plugging side 39 on which the plurality of conductor outlets 13 are located and a connecting side 41 on which the mounting assembly 17 is attached.

The plugging side 39 and the connecting side 41 are opposed according to a normal direction 43 of the insulating housing 7 that is substantially perpendicular to the extension direction 15 of the insulating housing 7.

The mounting assembly 17 is located between the connecting side 41 and the support rail 3 when the distribution block 1 cooperates with the support rail 3.

As also shown on figures 11 to 15, the distribution block 1 comprises an inlet screwed mechanism 45 configured to connect a conductor installed in the at least one conductor inlet 11.

According to one possibility, the distribution block 1 comprises one conductor inlet 11 and the inlet screwed mechanism 45 comprises one screw accessible from the outside of the insulating housing 7.

According to another possibility, the distribution block 1 comprises two conductor inlets 11 and the inlet screwed mechanism 45 comprises two corresponding screws accessible from the outside of the insulating housing 7.

The at least one conductor inlet 11 is located on an end side 47 of the insulating housing 7, the end side 47 extending transversally to the extension direction 15 of the insulating housing 7.

The at least one conductor inlet insertion direction is substantially perpendicular to each insertion direction of the plurality of conductor inlets.

According to a first possibility, the at least one conductor inlet insertion is substantially orthogonal to the extension plane of the end side 47.

According to a second possibility, the at least one conductor inlet insertion is substantially longitudinal to the extension plane of the end side 47. In this case, the insulating housing 7 comprises a corresponding inlet casing 49 extending from the extension plane of the end side 47.

As shown on figures 11 to 15, the distribution block 1 comprises a push-in mechanism 51 including a leaf spring 53 for each conductor outlet 13, the insulating housing 7 having for each conductor outlet 13 an actuating opening 55 for displacing said leaf spring 53 as shown on figures 8 and 9.

At least a part the plurality of conductor outlets 13 and corresponding leaf springs 53 have different sizes adapted to receive different sized conductors.

For example, a first group of conductor outlets 13 is adapted to a first conductor size and a second group of conductor outlets 13 is adapted to a second conductor size that is bigger.

As shown on figure 13, the leaf springs 53 of the push-in mechanism 51 can be realized in one piece. According to another possibility, the conductive entity 9 and leaf springs 53 can constitute a single piece in brass.

According to another possibility, the leaf springs 53 can be independent springs configured to cooperate with the conductive entity 9 as in figures 12 and 14.

The conductive entity 9 can comprise a metal sheet that is cut and folded as in figures 12 and 13 or a machined metal block as in figures 13 and 15.

As a conclusion, the different variants of the distribution block 1 can be installed on the support rail 3 in two different ways. It simplifies the handling of the distribution blocks 1 in terms of stock and part references. The distribution block 1 can also be displaced when already wired if there is a need of place for another part to be installed on the support rail 3.

## Claims

1. Distribution block (1) configured to cooperate with a support rail (3) extending according to a support direction (5), the distribution block (1) being provided with:
- an insulating housing (7),
- a conducting entity (9) included in the insulating housing (7),
- at least one conductor inlet (11) formed in the insulating housing (7),
- a plurality of conductor outlets (13) formed in the insulating housing (7) and organized in one or several rows, said one or several rows extending substantially parallel to an extension direction (15) of the insulating housing (7),
- a mounting assembly (17) attached on the insulating housing (7) and configured to cooperate with the support rail (3), the distribution block (1) being arranged to be mounted on the support rail (3) according to a longitudinal configuration wherein the extension direction (15) of the insulating housing (7) is substantially parallel to the support direction (5) and according to a transverse configuration wherein the extension direction (15) of the insulating housing is transverse to the support direction (5),
wherein the mounting assembly (17) comprises a snap-fit device (19) configured to cooperate with the support rail (3), the snap-fit device (19) comprises a plurality of pairs of opposed flanges (21),
wherein the mounting assembly (17) is fixed on the insulating housing (7) and said plurality of pairs of opposed flanges (21) comprises at least one pair of longitudinal opposed flanges (21a) configured to cooperate with the support rail (3) in longitudinal configuration and at least one pair of transverse opposed flanges (21b) configured to cooperate with the support rail (3) in transverse configuration,
**characterised in that** the at least one pair of transverse opposed flanges (21b) are located between the at least one pair of longitudinal opposed flanges (21a) transversally to the extension direction (15) of the insulating housing (7).

2. Distribution block (1) according to claim 1, wherein at least one part of the insulating housing (7) and the mounting assembly (17) are realized in one piece.

3. Distribution block (1) according to one of the claims 1 or 2, wherein the mounting assembly (17) comprises a release mechanism (31) configured to disengage the snap-fit device (19).

4. Distribution block (1) according to claim 3, wherein the release mechanism (31) comprises a biasing element (33) configured to displace at least one part of a flange (21), the biasing element (33) comprising a lever configured to be displaced by hand and/or by a tool.

5. Distribution block (1) according to one of the claims 1 to 4, wherein the insulating housing (7) presents a plugging side (39) on which the plurality of conductor outlets (13) are located and a connecting side (41) on which the mounting assembly (17) is attached, the plugging side (39) and the connecting side (41) being opposed according to a normal direction (43) of the insulating housing (7) that is substantially perpendicular to the extension direction (15) of the insulating housing (7).

6. Distribution block (1) according to one of the claims 1 to 5, comprising an inlet screwed mechanism (45) configured to connect a conductor installed in the at least one conductor inlet (11).

7. Distribution block (1) according to one of the claims 1 to 6, wherein the at least one conductor inlet (11) is located on an end side (47) of the insulating housing (7), the end side (47) extending transversally to the extension direction (15) of the insulating housing (7).

8. Distribution block (1) according to one of the claims 1 to 7, comprising a push-in mechanism (51) including a leaf spring (53) for each conductor outlet (13), the insulating housing (7) having for each conductor outlet (13) an actuating opening (55) for displacing said leaf spring (53).

9. Distribution block (1) according to claim 8, wherein at least a part the plurality of conductor outlets (13) and corresponding leaf springs (53) have different sizes adapted to receive different sized conductors.

10. Distribution block (1) according to one of the claims 8 or 9, wherein at least a part of the leaf springs (53) of the push-in mechanism (51) are realized in one piece.

11. Distribution block (1) according to one of the claims 1 to 10, wherein the conductive entity (9) comprises a metal sheet that is cut and folded or a machined metal block.

## Patentansprüche

1. Verteilerblock (1), der konfiguriert ist, um mit einer sich gemäß einer Tragrichtung (5) erstreckenden Tragschiene (3) zusammenzuwirken, wobei der Verteilerblock (1) vorgesehen ist mit:
- einem Isoliergehäuse (7),
- einer leitenden Einheit (9), die im Isoliergehäuse (7) beinhaltet ist,
- mindestens einem Leitereingang (11), der im Isoliergehäuse (7) ausgebildet ist,
- einer Vielzahl von Leiterausgängen (13), die im Isoliergehäuse (7) ausgebildet sind und in einer oder mehreren Reihen angeordnet sind, wobei die eine oder mehreren Reihen sich im Wesentlichen parallel zu einer Erstreckungsrichtung (15) des Isoliergehäuses (7) erstrecken,
- einer Montageanordnung (17), die am Isoliergehäuse (7) befestigt ist und konfiguriert ist, um mit der Tragschiene (3) zusammenzuwirken, wobei der Verteilerblock (1) angeordnet ist, um an der Tragschiene (3) gemäß einer Längskonfiguration montiert zu werden, wobei die Erstreckungsrichtung (15) des Isoliergehäuses (7) im Wesentlichen parallel zur Tragrichtung (5) ist, und gemäß einer Querkonfiguration, wobei die Erstreckungsrichtung (15) des Isoliergehäuses quer zur Tragrichtung (5) ist,
wobei die Montageanordnung (17) eine Schnappverschlussvorrichtung (19) umfasst, die konfiguriert ist, um mit der Tragschiene (3) zusammenzuwirken, wobei die Schnappverschlussvorrichtung (19) eine Vielzahl von Paaren von gegenüberliegenden Flanschen (21) umfasst,
wobei die Montageanordnung (17) am Isoliergehäuse (7) fixiert ist und die Vielzahl von Paaren gegenüberliegender Flansche (21) mindestens ein Paar in Längsrichtung gegenüberliegender Flansche (21a) umfasst, die konfiguriert sind, um mit der Tragschiene (3) in Längskonfiguration zusammenzuwirken, und mindestens ein Paar in Querrichtung gegenüberliegender Flansche (21b), die konfiguriert sind, um mit der Tragschiene (3) in Querkonfiguration zusammenzuwirken,
**dadurch gekennzeichnet, dass** sich das mindestens eine Paar in Querrichtung gegenüberliegender Flansche (21b) zwischen dem mindestens einen Paar in Längsrichtung gegenüberliegender Flansche (21a) quer zur Erstreckungsrichtung (15) des Isoliergehäuses (7) befindet.

2. Verteilerblock (1) nach Anspruch 1, wobei mindestens ein Teil des Isoliergehäuses (7) und die Montageanordnung (17) in einem Stück angefertigt sind.

3. Verteilerblock (1) nach einem der Ansprüche 1 oder 2, wobei die Montageanordnung (17) einen Freigabemechanismus (31) umfasst, der konfiguriert ist, um die Schnappverschlussvorrichtung (19) zu lösen.

4. Verteilerblock (1) nach Anspruch 3, wobei der Freigabemechanismus (31) ein Vorspannelement (33) umfasst, das konfiguriert ist, um mindestens einen Teil eines Flansches (21) zu verschieben, wobei das Vorspannelement (33) einen Hebel umfasst, der konfiguriert ist, um von Hand und/oder mit einem Werkzeug verschoben zu werden.

5. Verteilerblock (1) nach einem der Ansprüche 1 bis 4, wobei das Isoliergehäuse (7) eine Steckseite (39) aufweist, an der sich die Vielzahl von Leiterausgängen (13) befindet, und eine Anschlussseite (41), an der die Montageanordnung (17) befestigt ist, wobei sich die Steckseite (39) und die Anschlussseite (41) gemäß einer Senkrechtrichtung (43) des Isoliergehäuses (7) gegenüberliegen, die im Wesentlichen perpendikular zur Erstreckungsrichtung (15) des Isoliergehäuses (7) ist.

6. Verteilerblock (1) nach einem der Ansprüche 1 bis 5, einen Eingangsschraubmechanismus (45) umfassend, der konfiguriert ist, um einen Leiter zu verbinden, der in dem mindestens einen Leitereingang (11) installiert ist.

7. Verteilerblock (1) nach einem der Ansprüche 1 bis 6, wobei sich der mindestens eine Leitereingang (11) an einer Stirnseite (47) des Isoliergehäuses (7) befindet, wobei sich die Stirnseite (47) quer zur Erstreckungsrichtung (15) des Isoliergehäuses (7) erstreckt.

8. Verteilerblock (1) nach einem der Ansprüche 1 bis 7, einen Einsteckmechanismus (51) umfassend, der ein Federblatt (53) für jeden Leiterausgang (13) beinhaltet, wobei das Isoliergehäuse (7) für jeden Leiterausgang (13) eine Betätigungsöffnung (55) zum Verschieben des Federblatts (53) hat.

9. Verteilerblock (1) nach Anspruch 8, wobei mindestens ein Teil der Vielzahl von Leiterausgängen (13) und entsprechenden Federblättern (53) unterschiedliche Größen aufweisen, die angepasst sind, um unterschiedlich große Leiter aufzunehmen.

10. Verteilerblock (1) nach einem der Ansprüche 8 oder 9, wobei mindestens ein Teil der Federblätter (53) des Einsteckmechanismus (51) in einem Stück angefertigt ist.

11. Verteilerblock (1) nach einem der Ansprüche 1 bis 10, wobei die leitfähige Einheit (9) ein Metallblech umfasst, das gestanzt und gefaltet ist, oder einen bearbeiteten Metallblock.

## Revendications

1. Bloc de distribution (1) configuré pour coopérer avec un rail de support (3) s'étendant selon une direction de support (5), le bloc de distribution (1) étant pourvu de :
- un boîtier isolant (7),
- une entité conductrice (9) incluse dans le boîtier isolant (7),
- au moins une entrée de conducteur (11) formée dans le boîtier isolant (7),
- une pluralité de sorties de conducteur (13) formées dans le boîtier isolant (7) et organisées en une ou plusieurs rangées, lesdites une ou plusieurs rangées s'étendant sensiblement parallèlement à une direction d'extension (15) du boîtier isolant (7),
- un ensemble de montage (17) attaché sur le boîtier isolant (7) et configuré pour coopérer avec le rail de support (3), le bloc de distribution (1) étant agencé pour être monté sur le rail de support (3) selon une configuration longitudinale dans laquelle la direction d'extension (15) du boîtier isolant (7) est sensiblement parallèle à la direction de support (5) et selon une configuration transversale dans laquelle la direction d'extension (15) du boîtier isolant est transversale à la direction de support (5),
dans lequel l'ensemble de montage (17) comprend un dispositif d'encliquetage (19) configuré pour coopérer avec le rail de support (3), le dispositif d'encliquetage (19) comprend une pluralité de paires de brides opposées (21),
dans lequel l'ensemble de montage (17) est fixé sur le boîtier isolant (7) et ladite pluralité de paires de brides opposées (21) comprend au moins une paire de brides opposées longitudinales (21a) configurées pour coopérer avec le rail de support (3) en configuration longitudinale et au moins une paire de brides opposées transversales (21b) configurées pour coopérer avec le rail de support (3) en configuration transversale,
**caractérisé en ce que** l'au moins une paire de brides opposées transversales (21b) sont situées entre l'au moins une paire de brides opposées longitudinales (21a) transversalement à la direction d'extension (15) du boîtier isolant (7).

2. Bloc de distribution (1) selon la revendication 1, dans lequel au moins une partie du boîtier isolant (7) et l'ensemble de montage (17) sont réalisés en une seule pièce.

3. Bloc de distribution (1) selon l'une des revendications 1 ou 2, dans lequel l'ensemble de montage (17) comprend un mécanisme de libération (31) configuré pour désengager le dispositif d'encliquetage (19).

4. Bloc de distribution (1) selon la revendication 3, dans lequel le mécanisme de libération (31) comprend un élément de sollicitation (33) configuré pour déplacer au moins une partie d'une bride (21), l'élément de sollicitation (33) comprenant un levier configuré être déplacé à la main et/ou avec un outil.

5. Bloc de distribution (1) selon l'une des revendications 1 à 4, dans lequel le boîtier isolant (7) présente un côté d'enfichage (39) sur lequel sont situées la pluralité de sorties de conducteur (13) et un côté de connexion (41) sur lequel est attaché l'ensemble de montage (17), le côté d'enfichage (39) et le côté de connexion (41) étant opposés selon une direction normale (43) du boîtier isolant (7) qui est sensiblement perpendiculaire à la direction d'extension (15) du boîtier isolant (7).

6. Bloc de distribution (1) selon l'une des revendications 1 à 5, comprenant un mécanisme vissé d'entrée (45) configuré pour connecter un conducteur installé dans l'au moins une entrée de conducteur (11).

7. Bloc de distribution (1) selon l'une des revendications 1 à 6, dans lequel l'au moins une entrée de conducteur (11) est située sur un côté d'extrémité (47) du boîtier isolant (7), le côté d'extrémité (47) s'étendant transversalement à la direction d'extension (15) du boîtier isolant (7).

8. Bloc de distribution (1) selon l'une des revendications 1 à 7, comprenant un mécanisme d'enfoncement (51) incluant un ressort à lames (53) pour chaque sortie de conducteur (13), le boîtier isolant (7) ayant pour chaque sortie de conducteur (13) une ouverture d'actionnement (55) pour déplacer ledit ressort à lames (53).

9. Bloc de distribution (1) selon la revendication 8, dans lequel au moins une partie de la pluralité de sorties de conducteur (13) et les ressorts à lames (53) correspondants ont des tailles différentes adaptées pour recevoir des conducteurs de tailles différentes.

10. Bloc de distribution (1) selon l'une des revendications 8 ou 9, dans lequel au moins une partie des ressorts à lames (53) du mécanisme d'enfoncement (51) sont réalisés en une seule pièce.

11. Bloc de distribution (1) selon l'une des revendications 1 à 10, dans lequel l'entité conductrice (9) comprend une tôle qui est découpée et pliée ou un bloc métallique usiné.
